# EUROPÄISCHE PATENTSCHRIFT

(11) **EP 2 508 391 B1**
(45) Veröffentlichungstag und Bekanntmachung des Hinweises auf die Patenterteilung: **05.07.2017**
(21) Anmeldenummer: 12174003.9
(22) Anmeldetag: 28.05.2009
(51) Int. Cl.: B60Q 1/08, B60Q 1/14, G06K 9/00

(54) **Verfahren und Vorrichtung zum Steuern der Lichtabgabe eines Frontscheinwerfers eines Fahrzeugs**
Method and device for controlling the light emission of a front headlamp of a vehicle
Procédé et dispositif de commande de l'émission lumineuse d'un phare avant d'un véhicule

(30) Priorität: 30.05.2008 DE 102008025947
(43) Veröffentlichungstag der Anmeldung: 10.10.2012
(62) Teilanmeldung aus: 09161323.2
(73) Patentinhaber: Hella KGaA Hueck & Co., 59552 Lippstadt (DE)
(72) Erfinder: Hoffmann, Ingo, 13089 Berlin (DE)
(74) Vertreter: Schaumburg und Partner Patentanwälte mbB

(56) Entgegenhaltungen:
- EP-A- 1 780 462
- EP-A2- 1 506 893
- WO-A1-02/04247
- DE-A1- 10 156 649
- DE-A1-102006 055 904

## Beschreibung

Die Erfindung betrifft ein Verfahren und eine Vorrichtung zum Steuern der Lichtabgabe mindestens eines Frontscheinwerfers eines Fahrzeugs, bei denen mindestens ein Bild mit einer Abbildung eines Bereichs vor dem Fahrzeug erfasst wird. Im erfassten Bild wird mindestens eine Abbildung mindestens eines Objekts detektiert und das Objekt wird klassifiziert. Die Lichtabgabe des Frontscheinwerfers wird abhängig von dem klassifizierten Objekt gesteuert.

Aus dem Dokument DE 100 60 734 A1 ist ein System für ein Kraftfahrzeug bekannt, bei dem Verkehrsschilder mittels einer Kamera erfasst und die Scheinwerfer des Kraftfahrzeugs so angesteuert werden, dass in bestimmten Verkehrssituationen die Schilder gezielt beleuchtet werden.

Aus dem Dokument DE 10 2006 041 857 A1 ist ein System bekannt, bei dem für die Verkehrssicherheit relevante Objekte erkannt und Lichtmuster zur Anzeige von Hinweisen auf diese Objekte auf die Fahrbahn projiziert werden. Vorzugsweise wird der Typ des ermittelten relevanten Objekts durch das Lichtmuster dem Fahrzeugführer des Fahrzeugs angezeigt.

Aus dem Dokument EP 1 780 462 A1 ist ein Frontscheinwerfer für ein Fahrzeug bekannt, mit dessen Hilfe die Blendung anderer Verkehrsteilnehmer wirkungsvoll vermieden werden kann.

Aus dem Dokument US 6,993,255 B2 ist ein System zur adaptiven Beleuchtung insbesondere zum Einsatz in Fahrzeugen bekannt.

Aus dem Dokument DE 103 36 681 B4 ist ein Kraftfahrzeug mit einer Einrichtung zur Umfelderfassung bekannt, die mindestens ein im Umfeld befindliches Objekt ermittelt. Es ist eine Beleuchtungseinrichtung zur individuellen Beleuchtung des Objekts vorgesehen.

Trotz einer Vielzahl bekannter Systeme zur gezielten Beleuchtung von Verkehrsschildern mit Hilfe von Zusatzscheinwerfern tritt das Problem auf, dass Verkehrsschilder zu stark beleuchtet werden können und der Fahrzeugführer des Fahrzeugs geblendet werden kann oder dass das Verkehrsschild zu gering beleuchtet wird. Ferner tritt das Problem auf, dass bei der Bildverarbeitung von Bildern mit einer Abbildung eines Verkehrsschilds mit einer sehr großen Helligkeit des vom Verkehrsschild reflektierten Lichts zusätzliche Maßnahmen bei der Bildaufnahme und/oder Bildauswertung getroffen werden müssen, um eine erforderliche Weiterverarbeitung der Bilddaten der Abbildung des Objekts durchführen zu können. Dies ist insbesondere dann erforderlich, wenn die Abbildung des Objekts von einem Verkehrszeichenerkennungsverfahren weiterverarbeitet wird. Ferner tritt bei zu geringer Helligkeit der Abbildung des Objekts das Problem auf, dass für die Klassifizierung des Objekts erforderliche Informationen nicht in ausreichendem Maß zur Verfügung stehen und insbesondere bei der Weiterverarbeitung der Bilddaten der Abbildung des Objekts durch ein Verkehrszeichenerkennungsverfahren eine ungenaue oder falsche Erkennung erfolgen kann.

Aufgabe der Erfindung ist es, ein Verfahren und eine Vorrichtung zum Steuern der Lichtabgabe mindestens eines Frontscheinwerfers eines Fahrzeugs anzugeben, bei denen auf einfache Art und Weise eine geeignete Lichtabgabe der Frontscheinwerfer des Fahrzeugs erreicht wird.

Diese Aufgabe wird durch ein Verfahren zum Steuern der Lichtabgabe mindestens eines Frontscheinwerfers eines Fahrzeugs mit den Merkmalen des Patentanspruchs 1 und durch eine Vorrichtung mit den Merkmalen des nebengeordneten Vorrichtungsanspruchs gelöst. Vorteilhafte Weiterbildungen der Erfindung sind in den abhängigen Patentansprüchen angegeben.

Durch ein Verfahren und durch eine Vorrichtung zum Steuern der Lichtabgabe mindestens eines Frontscheinwerfers eines Fahrzeugs wird erreicht, dass lichtreflektierende Objekte, d. h. Objekte mit Reflektoren, auf geeignete Art und Weise mit Hilfe des von dem mindestens einen Frontscheinwerfer des Fahrzeugs abgegebenen Lichts beleuchtet werden, sodass weder eine Blendung des Fahrzeugsführers des Fahrzeugs durch das reflektierte Licht noch eine unzureichende Beleuchtung des Objekts erfolgt. Besonders vorteilhaft ist es, dass kein Zusatzscheinwerfer oder keine separate Lichtquelle zur gezielten Beleuchtung des Objekts vorhanden sein muss sondern die Lichtabgabe des Frontscheinwerfers des Fahrzeugs derart gesteuert wird, dass das Objekt korrekt beleuchtet wird.

Bei einer vorteilhaften Weiterbildung werden Objekte in den erfassten Bildern mit Hilfe eines von einer Verarbeitungseinheit abgearbeiteten Bildverarbeitungsverfahrens und/oder eines Verkehrszeichenerkennungsverfahrens detektiert. Diese Verfahren detektierten Abbildungen von Objekten in mindestens einem von einer Bilderfassungseinheit aufgenommenen Bild. Als Bilderfassungseinheit ist insbesondere eine frontseitig angeordnete Stereokamera geeignet. Auf diese Art und Weise kann mit relativ einfachen Mitteln ein Bild mit der Abbildung des Bereichs vor dem Fahrzeug erfasst und diesem Bild entsprechende Bilddaten weiterverarbeitet werden. Mit Hilfe der Stereokamera kann zusätzlich die Entfernung zwischen Kamera und Objekt ermittelt werden. Mit der bekannten Entfernung kann das von den Frontscheinwerfern des Fahrzeugs abgestrahlte Licht derart gesteuert werden, dass das Objekt korrekt beleuchtet wird. Alternativ kann die Entfernung des Fahrzeugs zum Objekt mit Hilfe eines anderen geeigneten Entfernungsmesssystems ermittelt werden. Dann kann anstatt der Stereokamera eine andere geeignete Bilderfassungseinheit eingesetzt werden, insbesondere mindestens eine Monokularkamera.

Mit Hilfe einer Bilderfassungseinheit kann eine Bildfolge von Bildern mit Abbildungen des Bereichs vor dem Fahrzeug aufgenommen werden, wobei die Bilderfassungseinheit Bilddaten bildweise erzeugt, die mit Hilfe einer Verarbeitungseinheit weiterverarbeitet werden. Dabei ist es vorteilhaft, nur einige Bilder der mit Hilfe der Bilderfassungseinheit erfassten Bilder einer Bildfolge zum Steuern der Lichtabgabe des mindestens einen Frontscheinwerfers des Fahrzeugs zu verarbeiten. Dadurch kann der Verarbeitungsaufwand der Verarbeitungseinheit zur Steuerung der Lichtabgabe des Frontscheinwerfers des Fahrzeugs erforderlichenfalls verringert werden.

Bei einer weiteren vorteilhaften Weiterbildung der Erfindung wird mit Hilfe einer weiteren Lichtquelle Infrarotlicht erzeugt und in den Erfassungsbereich einer Bilderfassungseinheit abgestrahlt. Das von der Lichtquelle abgestrahlte und von dem lichtreflektierenden Objekt reflektierte Infrarotlicht wird durch die Bilderfassungseinheit erfasst und separat oder zusammen mit weiteren Bilddaten zur Detektion von lichtreflektierenden Objekten weiterverarbeitet. Dadurch kann eine zusätzliche Beleuchtung des lichtreflektierenden Objekts erfolgen, ohne dass der Fahrzeugführer des Fahrzeugs oder Fahrzeugführer entgegenkommender Fahrzeuge von dem nicht sichtbaren abgestrahlten Infrarotlicht geblendet werden. Das Infrarotlicht dient insbesondere zur Beleuchtung des Nahbereichs vor dem Fahrzeug.

Bei einer anderen Weiterbildung der Erfindung werden mit Hilfe einer Bilderfassungseinheit nacheinander mehrerer Bilder einer Bildfolge erfasst, in denen nacheinander jeweils eine Abbildung desselben Objekts detektiert wird. Ein Objektverfolgungsverfahren wird zur Verfolgung des Objekts über mehrere Bilder durchgeführt. Ein solches Objektverfolgungsverfahren wird auch als Trackingverfahren bezeichnet.

Als lichtreflektierende Objekte werden insbesondere Objekte mit Reflektoren, wie Verkehrsschilder, Leitpfosten und/oder Warnbaken, detektiert. Die Verkehrsschilder haben länderabhängig verschieden aufgebaute Reflektoren, insbesondere ist die Vorderseite eines Verkehrsschildes mit einem stark lichtreflektierenden Material, insbesondere einer stark lichtreflektierenden Folie, beschichtet. Alternativ oder zusätzlich kann das Verkehrszeichen aus Retroreflektoren oder aus anderen Reflektorelementen zusammengesetzt sein.

Ferner ist es vorteilhaft, einen Sollwert oder Sollbereich voreinzustellen. Dann kann überprüft werden, ob die ermittelte Helligkeit der Abbildung des Objekts den Sollwert bzw. den Sollbereich überschreitet oder nicht. Der Sollbereich ist vorzugsweise durch einen oberen und einen unteren Sollwert begrenzt. Dabei ist es vorteilhaft, den Sollwert bzw. den Sollbereich abhängig von der ermittelten Helligkeit der Umgebung zu verändern. Dadurch kann der Sollwert bzw. Sollbereich an die Lichtempfindlichkeit des Auges des Fahrzeugführers oder anderer Verkehrsteilnehmer angepasst werden.

Die Lichtabgabe des Frontscheinwerfers des Fahrzeugs wird verringert oder die Lichtabgabe des Frontscheinwerfers des Fahrzeugs wird verändert, wenn die ermittelte Helligkeit der Abbildung des lichtreflektierenden Objekts den voreingestellten Sollwert überschreitet oder außerhalb des voreingestellten Sollbereichs liegt. Die Lichtabgabe des Frontscheinwerfers kann insbesondere durch eine Reduzierung der Intensität des durch den Frontscheinwerfer abgestrahlten Lichts, durch eine Deaktivierung einzelner Lichtquellen des Frontscheinwerfers und/oder durch eine Änderung der Lichtverteilung des durch den Frontscheinwerfer abgestrahlten Lichts reduziert werden.

Die Lichtabgabe und/oder Lichtabgabebereich des Frontscheinwerfers des Fahrzeugs wird erhöht bzw. verändert, um mehr Licht auf das Objekt abzustrahlen und insbesondere die Helligkeit der Abbildung des Objekts in nachfolgend erfassten Bildern zu erhöhen, wenn die ermittelte Helligkeit der Abbildung des lichtreflektierenden Objekts den voreingestellten Sollwert unterschreitet oder einen voreingestellten Sollbereich unterschreitet. Die Lichtabgabe des Frontscheinwerfers bzw. die Beleuchtung des Objekts kann durch eine Erhöhung der Intensität des durch den Frontscheinwerfer (26) abgestrahlten Lichts, durch das Zuschalten mindestens einer weiteren Lichtquelle und/oder durch eine Änderung der Lichtverteilung des durch den Frontscheinwerfer (26) abgestrahlten Lichts erhöht werden. Nach der Änderung des vom Frontscheinwerfer abgestrahlten Lichts kann die Helligkeit der Abbildung desselben Objekts in einem weiteren Bild wiederholt ermittelt werden. Dann kann überprüft werden, ob der ermittelte Helligkeitswert einen voreingestellten Sollwert oder einen voreingestellten Sollbereich unterschreitet und/oder überschreitet. Abhängig davon kann die Intensität des durch die Frontscheinwerfer des Fahrzeugs abgestrahlten Lichts und/oder die Lichtverteilung des von den Frontscheinwerfern des Fahrzeugs abgestrahlten Lichts entsprechend geändert werden. Alternativ kann die Lichtabstrahlung der Frontscheinwerfer abhängig von der ermittelten Helligkeit der Abbildung mehrerer detektierter Objekte gesteuert werden.

Weiterhin ist es vorteilhaft, nachdem festgestellt wird, dass sich das detektierte Objekt nicht mehr im Erfassungsbereich einer Bilderfassungseinheit des Fahrzeugs befindet, mindestens ein weiteres lichtreflektierendes Objekt zu detektieren. Die Lichtabgabe des mindestens einen Frontscheinwerfers des Fahrzeugs wird dann abhängig von der ermittelten Helligkeit der Abbildung des weiteren Objekts oder der weiteren Objekte gesteuert.

Als Bilderfassungseinheit eignet sich insbesondere eine bekannte Fahrzeugkamera. Die Bilderfassungseinheit kann insbesondere eine monokulare Kamera, mehrere monokulare Kameras, ein Stereokamerasystem oder mehrere Stereokamerasysteme umfassen, wobei die einzelnen Kameras Bilddaten von Graustufenbildern oder Farbbildern erzeugen. Besonders vorteilhaft ist die Verwendung einer Kamera mit mindestens einem CMOS-Bilderfassungssensor, der vorzugsweise Graustufenbilder erzeugt. Beispielsweise hat die Bilderfassungseinheit einen Active-Pixel-Sensor als Bilderfassungssensor.

Die durch den unabhängigen Vorrichtungsanspruch spezifizierte Vorrichtung kann in gleicher Weise weitergebildet werden, wie das Verfahren nach Anspruch 1. Insbesondere kann die Vorrichtung mit den in den abhängigen Patentansprüchen angegebenen Merkmalen bzw. durch entsprechende Vorrichtungsmerkmale weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: eine schematische Darstellung einer Verkehrssituation mit einem Fahrzeug und einem seitlich der Fahrbahn angeordnetem Verkehrszeichen als Seitenansicht; und
- Figur 2: einen Ablaufplan für die Optimierung der Beleuchtung eines Verkehrzeichens.

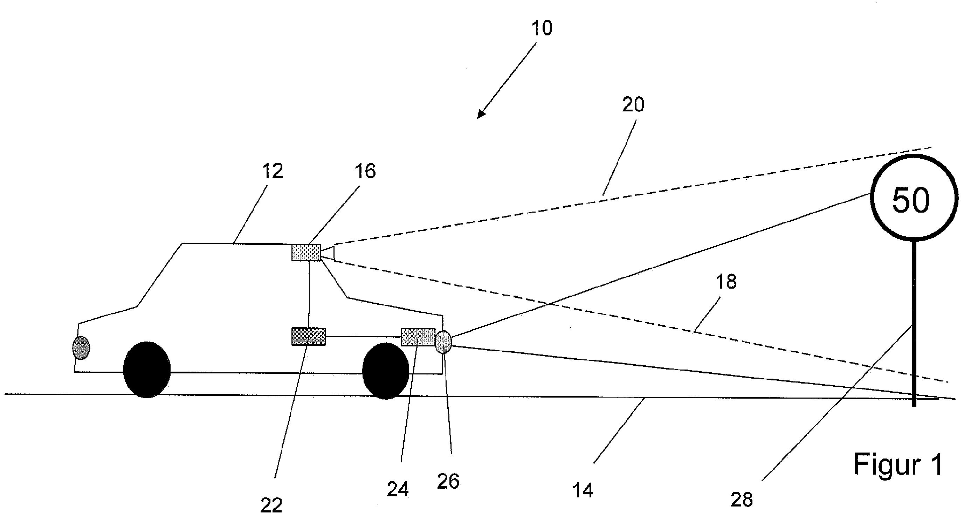

In Figur 1 ist eine Verkehrssituation gemäß einer ersten Ausführungsform der Erfindung dargestellt, bei der ein Fahrzeug 12 dargestellt ist, das entlang dem Fahrbahnverlauf einer Fahrbahn 14 fährt. Das Fahrzeug 12 hat eine Frontkamera 16, die eine Bildfolge mit Bildern eines Erfassungsbereichs vor dem Fahrzeug 12 erfasst. Der Erfassungsbereich ist in Figur 1 durch die Strichlinien 18, 20 begrenzt. Mit Hilfe der Frontkamera 16 werden somit Bilder mit Abbildungen von im Erfassungsbereich vorhandenen Objekten erfasst, die als Bilddaten von der Frontkamera 16 zu einer im Fahrzeug 12 angeordneten Verarbeitungseinheit 22 übertragen werden. Mit Hilfe der Frontkamera 16 werden die im Erfassungsbereich vor dem Fahrzeug 12 vorhandenen Objekte, wie das in Figur 1 dargestellte seitlich der Fahrbahn 14 angeordnete Verkehrsschild 28, auf dem ein Verkehrszeichen abgebildet ist erfasst. Die Bilddaten der Abbildung des Objekts 28 werden dann von der Verarbeitungseinheit 22 verarbeitet, wobei das Objekt 28 ausgehend von dessen Abbildung als Objekt detektiert und dessen Objekttyp klassifiziert wird. Mit Hilfe von durch die Verarbeitungseinheit 22 abgearbeiteten Verkehrszeichenerkennungsverfahren kann ermittelt werden, um was für ein Verkehrschild es sich bei dem detektierten Verkehrsschild 28 handelt. In gleicher Weise werden als Objekte detektierte auf der Fahrbahn 14 vorausfahrende Fahrzeuge und auf einer Gegenfahrbahn der Fahrbahn 14 entgegenkommende Fahrzeuge mit Hilfe von durch die Verarbeitungseinheit 22 abgearbeiteten Bewertungs- und Klassifizierungsverfahren klassifiziert.

Die Frontkamera 16 ist vorzugsweise eine Stereokamera, mit der die Entfernung eines Objekts zur Stereokamera 16 und somit die Position von erfassten Objekten in einem Fahrzeugkoordinatensystem bestimmt werden kann. Für die detektierten Objekte können jeweils Objektparameter ermittelt werden. Solche Objektparameter können eine für das jeweilige Objekt ermittelte Objektklasse, die dreidimensionale Position des Objekts, die dreidimensionale Bewegungsrichtung des Objekts, die Geschwindigkeit des Objekts und/oder die Dauer der Beobachtung des Objekts in einer mit Hilfe der Frontkamera 16 des Fahrzeugs 12 erfassten Bildfolge sein. Diese Objektparameter können als Eingangsgrößen für ein Bewertungsverfahren zur Klassifizierung des Objekts durch die Verarbeitungseinheit 22 verwendet werden.

Anhand der ermittelten Objekte wird die optimale Lichtverteilung für die Frontscheinwerfer 26 ausgewählt. Informationen über die ausgewählte bzw. festgelegte Lichtverteilung wird von der Verarbeitungseinheit 22 zu einem Lichtsteuermodul 24 übertragen, das eine den übermittelten Informationen entsprechende Lichtverteilung abhängig von den verfügbaren konkreten Einstellmöglichkeiten der Frontscheinwerfer 26 durch eine entsprechende Ansteuerung der Frontscheinwerfer 26 erzeugt.

Handelt es sich bei dem detektierten Objekt 28 um ein Verkehrschild, einen Leitpfosten, eine Warnbake, eine Warntafel oder ein anderes reflektierendes Objekt, so können drei Fälle auftreten:
1. Das Objekt 28 ist nur unzureichend beleuchtet, so dass der Fahrer des Fahrzeuges 12 dieses eventuell nicht oder erst zu spät erkennen kann.
2. Das Objekt 28 wird durch sie Frontscheinwerfer 26 so stark angestrahlt, dass der Fahrer des Fahrzeugs 12 durch das von dem Objekt 28 reflektierte Licht geblendet wird und somit die Verkehrsicherheit gefährdet sein kann.
3. Das Objekt 28 wird von dem durch die Frontscheinwerfer 26 abgestrahlten Licht so beleuchtet, dass es weder den Fahrer des Fahrzeuges 12 blendet, noch dass das Verkehrsschild 28 unzureichend beleuchtet ist.

Somit ist der dritte Fall der gewünschte Zustand und der erste und der zweite Fall sollen vermieden werden.

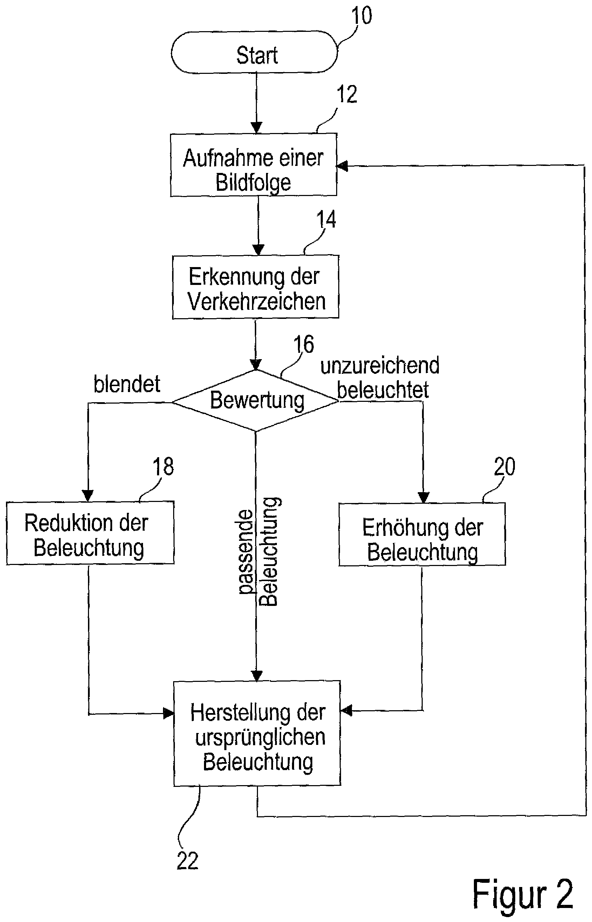

In Figur 2 ist ein Ablaufplan für die Optimierung der Beleuchtung eines Verkehrschilds 28 gezeigt. Nachdem im ersten Schritt S10 das Verfahren gestartet wurde, wird im Schritt S 12 von der Frontkamera 16 eine Bildfolge von Bildern mit Abbildungen der Objekte im Erfassungsbereich vor dem Fahrzeug 12 aufgenommen. Im nächsten Schritt S14 wird aus der Bildfolge ein Bild ausgewählt und mit Hilfe in der Verarbeitungseinheit 22 hinterlegter Bildverarbeitungs- und/oder Verkehrschildererkennungsverfahren Verkehrschilder 28 detektiert. Hierbei muss nicht zwangsläufig jedes Bild der von der Frontkamera 16 aufgenommenen Bildfolge verarbeitet werden, sondern es können auch nur Bilder in einem gewissen zeitlichen Abstand ausgewählt werden. Jedoch sind auch Ausführungsformen möglich, bei denen jedes Bild der Bildfolge zur Detektierung von Objekten und gegebenenfalls zur Verkehrszeichenerkennung verarbeitet wird. Zusätzlich kann bei der Erkennung der Verkehrzeichen Infrarot-Beleuchtung im Nahbereich (NIR-Beleuchtung) eingesetzt werden. Mit Hilfe einer in der Verarbeitungseinheit 22 hinterlegten Trackingfunktion können die Abbildungen der Verkehrschilder 28 in den Bildern der durch die Frontkamera 16 aufgenommen Bildfolge nachverfolgt werden. Ferner kann die genaue Position der Verkehrschilder 28 im Bereich vor dem Fahrzeug mit geeigneten Entfernungsmessverfahren bestimmt werden.

Anschließenden wird in Schritt S16 die tatsächliche Helligkeit des von dem detektierten Verkehrschild 28 reflektierten Lichtes ermittelt und mit einem in der Verarbeitungseinheit 22 voreingestellten Sollwert verglichen. Dieser Sollwert kann fest vorgegeben sein oder in Abhängigkeit von der Umgebungshelligkeit variiert werden. Hierzu wird die Umgebungshelligkeit mittels eines nicht dargestellten Sensorensystems oder aus dem durch die Frontkamera 16 aufgenommen Bild ermittelt. Vorzugsweise wird nicht ein einzelner Sollwert vorgegeben, sondern ein Bereich vorgegeben, in dem die tatsächliche Helligkeit des von dem detektierten Verkehrschild 28 reflektierten Lichtes liegen soll. Dieser Bereich wird durch einen unteren und einen oberen Sollwert begrenzt.

Wird in Schritt S16 ermittelt, dass die ermittelte tatsächliche Helligkeit größer als der Sollwert bzw. der obere Sollwert ist blendet das Verkehrschild 28 den Fahrer des Fahrzeugs 12. Dadurch kann die Verkehrssicherheit gefährdet werden. Dann werden im Schritt S18 mit Hilfe der Verarbeitungseinheit 22 über die Lichtsteuermodule 24 die Frontscheinwerfer 26 des Fahrzeuges 12 derart angesteuert, dass eine Blendung durch das von dem Verkehrschild 28 reflektierte Licht vermieden wird. Hierzu kann beispielweise die Intensität des durch die Frontscheinwerfer 26 ausgesandten Lichts reduziert, einzelne Leuchtelemente, wie zum Beispiel einzelne LEDs in einem LED-Array, deaktiviert und/oder die Lichtverteilung des durch die Fronscheinwerfer 26 abgestrahlten Lichts mit Hilfe optischer Elemente geändert werden. Durch die Auswahl bzw. Anordnung mindestens eines optischen Elements oder der Kombination mehrerer optischer Elemente zur Beeinflussung der Lichtverteilung kann beispielweise eine Lichtfigur gezielt ausgewählt und eingestellt werden. Solche Lichtfiguren sind beispielsweise aus dem Dokument EP 0935728 B1 bekannt. Dabei kann zur Erzeugung von Lichtfiguren insbesondere die VARIOX® Technologie der Anmelderin verwendet werden. Während sich das Fahrzeug 12 dem Verkehrsschild 28 nähert kann die Lichtverteilung des durch die Frontscheinwerfer 26 abgestrahlten Lichts kontinuierlich auf die relative Positionsänderung der Position des Fahrzeugs 12 in Bezug auf das Verkehrsschild 28 angepasst werden.

Wird in Schritt S16 jedoch ermittelt, dass die ermittelte tatsächliche Helligkeit kleiner als der Sollwert bzw. der untere Sollwert ist, wird das Verkehrschild 28 nicht ausreichend beleuchtet. Der Fahrer des Fahrzeugs 12 kann somit das Verkehrsschild 28 eventuell nicht oder erst zu spät erkennen, wodurch die Verkehrsicherheit gefährdet sein kann. Werden die aufgenommenen Bilder zusätzlich von einem Verkehrszeichenerkennungsverfahren verarbeitet, ist durch die unzureichende Beleuchtung des Verkehrsschildes die Erkennungswahrscheinlichkeit verringert, so dass eine korrekte Erkennung des Verkehrszeichens nicht oder nur mit geringer Erkennungswahrscheinlichkeit möglich ist. Die Verarbeitungseinheit 22 steuert dann im Schritt S20 über die Lichtsteuermodule 24 die Frontscheinwerfer 26 des Fahrzeuges 12 derart an, dass das Verkehrsschild 28 durch das von den Frontscheinwerfern 26 abgestrahlte Licht ausreichend beleuchtet wird. Hierzu kann beispielsweise die Intensität des durch die Frontscheinwerfer 26 ausgesandten Lichts erhöht werden, indem beispielsweise einzelne Lichtquellen, insbesondere LEDs in einem Array und/oder Kurvenlicht, zugeschaltet und/oder die Lichtverteilung des durch die Fronscheinwerfer 26 abgestrahlten Lichts durch optische Elemente geändert werden. Eine Veränderung der Lichtverteilung kann beispielweise durch die Wahl einer geeigneten Lichtfigur erfolgen. Solche Lichtfiguren sind beispielsweise aus dem Dokument EP 0935728 B1 bekannt und können insbesondere mit der VARIOX® Technologie der Anmelderin erzeugt werden. Während sich das Fahrzeug 12 dem Verkehrsschild 28 nähert kann die Lichtverteilung des durch die Frontscheinwerfer 26 abgestrahlten Lichts kontinuierlich oder schrittweise auf die Position des Fahrzeugs 12 in Bezug auf das Verkehrsschild 28 angepasst werden.

Wird im Schritt S16 jedoch festgestellt, dass das Verkehrschild 28 von dem durch die Frontscheinwerfer 26 abgestrahlten Licht so beleuchtet ist, dass es weder den Fahrer des Fahrzeuges 12 blendet noch dass das Verkehrsschild 28 unzureichend beleuchtet ist. Somit liegt die tatsächliche Helligkeit des von dem Verkehrsschild 28 reflektierten Lichts zwischen dem unteren und den oberen Sollwert bzw. sie entspricht dem Sollwert. Eine Anpassung der Beleuchtung des Verkehrsschildes 28 ist somit nicht erforderlich.

Nachdem das Fahrzeug 12 das Verkehrschild 28 passiert hat, wird in Schritt S22 die ursprüngliche Einstellung der Frontscheinwerfer 26 wieder hergestellt. Anschließend wird der Ablauf im Schritt S 12 fortgesetzt und der nachfolgende Ablauf wird für mindestens ein weiteres Objekt wiederholt. Es wird gemäß dem beschriebenen Ablauf ein neues reflektierendes Objekt detektiert und die Beleuchtung dieses Objektes optimiert.

Alternativ kann in Schritt S22 auf eine Wiederherstellung der ursprünglichen Einstellung der Frontscheinwerfer 26 verzichtet werden und direkt eine neue optimale Einstellung der Frontscheinwerfer 26 für die Beleuchtung eines neu detektierten reflektierenden Objekts ermittelt werden.

Alternativ kann das Verfahren dahingehend abgewandelt werden, dass vor Schritt S22 zu Schritt S 12 zurück verzweigt wird und in einem nachfolgendem Bild der Bildfolge die Abbildung desselben Verkehrsschildes 28 detektiert und die Helligkeit des von dem Verkehrsschild 28 reflektierten Lichts bestimmt wird. Anschließend wird erneut in den nachfolgenden Schritten S 14 bis S20 die Beleuchtung des Verkehrsschildes 28 optimiert wird, sofern die Beleuchtung des Verkehrschildes 28 nach dem ersten Durchlauf des Verfahrens noch nicht korrekt war. Dieser Verfahrensablauf kann solange wiederholt werden, bis das Verkehrsschild 28 passiert wurde. Auf diese Weise wird eine Regelung der Lichtabgabe der Frontscheinwerfer 26 erreicht. Nach dem Passieren des Verkehrsschildes 28 wird der Ablauf mit Schritt S22 fortgesetzt.

Im Ausführungsbeispiel wird die Optimierung der Beleuchtung eines Verkehrsschildes 28 beschrieben. Alternativ kann aber auch die Beleuchtung mehrerer im Erfassungsbereich der Frontkamera 16 detektierter reflektierender Objekte parallel optimiert werden. Dazu wird die Helligkeit der Abbildung jedes Objekts ermittelt und die Lichtabstrahlung der Frontscheinwerfer 26 auf das jeweilige Objekt und/oder auf die Objekte bei einer ermittelten zu großen Helligkeit reduziert und bei einer ermittelten zu geringen Helligkeit erhöht.

## Patentansprüche

1. Verfahren zum Steuern der Lichtabgabe mindestens eines Frontscheinwerfers eines Fahrzeugs,
bei dem mindestens ein Bild mit einer Abbildung eines Bereichs vor dem Fahrzeug (12) erfasst wird,
im erfassten Bild mindestens eine Abbildung mindestens eines Objekts detektiert wird,
überprüft wird, ob das Objekt (28) ein Objekt mit einem Reflektor oder ein selbstleuchtendes Objekt ist,
**dadurch gekennzeichnet, dass**
zumindest dann die Helligkeit der Abbildung des Objekts (28) ermittelt wird, wenn das Objekt (28) ein Objekt mit einem Reflektor ist, und
bei dem die Lichtabgabe des mindestens einen Frontscheinwerfers (26) des Fahrzeugs (12) abhängig von der ermittelten Helligkeit der Abbildung des mindestens einen Objekts (28) mit einem Reflektor gesteuert wird,
wobei die Lichtabgabe des Frontscheinwerfers (26) durch die Deaktivierung einzelner Lichtquellen reduziert wird, um weniger Licht auf das Objekt abzustrahlen, wenn die ermittelte Helligkeit der Abbildung des Objekts mit einem Reflektor einen voreingestellten Sollwert oder einen voreingestellten Sollbereich überschreitet, und wobei die Lichtabgabe des Frontscheinwerfers (26) durch das Zuschalten mindestens einer weiteren Lichtquelle erhöht wird, um mehr Licht auf das Objekt abzustrahlen, wenn die ermittelte Helligkeit der Abbildung des Objekts mit einem Reflektor einen voreingestellten Sollwert oder einen voreingestellten Sollbereich unterschreitet.

2. Verfahren nach Anspruch 1, **dadurch gekennzeichnet, dass** Objekte (28) in den erfassten Bildern mit Hilfe eines von einer Verarbeitungseinheit (22) abgearbeiteten Bildverarbeitungsverfahrens und/oder Verkehrszeichenerkennungsverfahrens detektiert werden, die die Abbildungen von Objekten (28) in mindestens einem von einer Bilderfassungseinheit (16) aufgenommenen Bild detektieren.

3. Verfahren nach einem der vorhergehenden Ansprüche, **dadurch gekennzeichnet, dass** als Bilderfassungseinheit (16) eine frontseitig angeordnete Stereokamera verwendet wird.

4. Verfahren nach einem der vorhergehenden Ansprüche, **dadurch gekennzeichnet, dass** mit Hilfe einer Bilderfassungseinheit (16) eine Bildfolge von Bildern mit Abbildungen des Bereichs vor dem Fahrzeug (12) aufgenommen wird, wobei die Bilderfassungseinheit (16) Bilddaten bildweise erzeugt, die mit Hilfe einer Verarbeitungseinheit (22) weiterverarbeitet werden.

5. Verfahren nach einem der vorhergehenden Ansprüche, **dadurch gekennzeichnet, dass** nur einige der mit Hilfe einer Bilderfassungseinheit (16) erfassten Bilder einer Bildfolge zum Steuern der Lichtabgabe des mindestens einen Frontscheinwerfers (26) des Fahrzeugs (12) verarbeitet werden.

6. Verfahren nach einem der vorhergehenden Ansprüche, **dadurch gekennzeichnet, dass** mit Hilfe einer weiteren Lichtquelle Infrarotlicht erzeugt und in den Erfassungsbereich einer Bilderfassungseinheit (16) abgestrahlt wird, wobei das von der Lichtquelle abgestrahlte und von dem Objekt (28) mit einem Reflektor reflektierte Infrarotlicht von der Bilderfassungseinheit (16) erfasst und separat oder zusammen mit weiteren Bilddaten zur Detektion von Objekten (28) mit einem Reflektor weiterverarbeitet wird.

7. Verfahren nach Anspruch 6, **dadurch gekennzeichnet, dass** das Infrarotlicht zur Beleuchtung des Nahbereichs vor dem Fahrzeug (12) dient.

8. Verfahren nach einem der vorhergehenden Ansprüche, **dadurch gekennzeichnet, dass** mit Hilfe einer Bilderfassungseinheit (16) nacheinander mehrere Bilder einer Bildfolge erfasst werden, in denen nacheinander jeweils eine Abbildung desselben Objekts (28) detektiert wird, wobei ein Objektverfolgungsverfahren zur Verfolgung eines Objekts (28) über mehrere Bilder durchgeführt wird.

9. Verfahren nach einem der vorhergehenden Ansprüche, **dadurch gekennzeichnet, dass** als Objekte (28) mit einem Reflektor Verkehrsschilder, Leitpfosten und/oder Warnbaken detektiert werden.

10. Verfahren nach einem der vorhergehenden Ansprüche, **dadurch gekennzeichnet, dass** ein Sollwert oder Sollbereich voreingestellt wird, und dass überprüft wird, ob die ermittelte Helligkeit der Abbildung des Objekts (28) den Sollwert bzw. den Sollbereich nicht überschreitet, wobei der Sollbereich vorzugsweise durch einen oberen und einen unteren Sollwert begrenzt ist.

11. Verfahren nach Anspruch 10, **dadurch gekennzeichnet, dass** der Sollwert bzw. der Sollbereich abhängig von der ermittelten Helligkeit der Umgebung verändert wird.

12. Verfahren nach einem der vorhergehenden Ansprüche, **dadurch gekennzeichnet, dass** zusätzlich die Lichtabgabe des Frontscheinwerfers (26) des Fahrzeugs (12) verringert oder der Lichtabgabebereich des Frontscheinwerfers (26) des Fahrzeugs (12) verändert wird, wenn die ermittelte Helligkeit der Abbildung des Objekts (28) mit einem Reflektor den voreingestellten Sollwert überschreitet oder außerhalb des voreingestellten Sollbereichs liegt.

13. Verfahren nach einem der vorhergehenden Ansprüche, **dadurch gekennzeichnet, dass** die Lichtabgabe des Frontscheinwerfers (26) zusätzlich durch eine Reduzierung der Intensität des durch den Frontscheinwerfer (26) abgestrahlten Lichts und/oder durch eine Änderung der Lichtverteilung des durch den Frontscheinwerfer (26) abgestrahlten Lichts, reduziert wird.

14. Verfahren nach einem der vorhergehenden Ansprüche, **dadurch gekennzeichnet, dass** die Lichtabgabe und/oder der Lichtabgabebereich des Frontscheinwerfers (26) des Fahrzeugs (12) erhöht bzw. verändert ist, um die Helligkeit der Abbildung des Objekts (28) in nachfolgend erfassten Bildern zu erhöhen, wenn die ermittelte Helligkeit der Abbildung des Objekts (28) mit einem Reflektor den voreingestellten Sollwert unterschreitet oder einen voreingestellten Sollbereich unterschreitet.

15. Verfahren nach einem der vorhergehenden Ansprüche, **dadurch gekennzeichnet, dass** die Lichtabgabe des Frontscheinwerfers (26) zusätzlich durch eine Erhöhung der Intensität des durch den Frontscheinwerfer (26) abgestrahlten Lichts und/oder durch eine Änderung der Lichtverteilung des durch den Frontscheinwerfer (26) abgestrahlten Lichts erhöht wird.

16. Verfahren nach einem der vorhergehenden Ansprüche, **dadurch gekennzeichnet, dass** nach der Änderung des vom Frontscheinwerfer (26) abgestrahlten Lichts wiederholt die Helligkeit der Abbildung desselben Objekts (28) in einem weiteren Bild ermittelt wird, und dass überprüft wird, ob der ermittelte Helligkeitswert einen voreingestellten Sollwert oder einen voreingestellten Sollbereich unter- und/oder überschreitet.

17. Verfahren nach einem der vorhergehenden Ansprüche, **dadurch gekennzeichnet, dass** nachdem sich das detektierte Objekt (28) nicht mehr im Erfassungsbereich einer Bilderfassungseinheit (16) des Fahrzeugs (12) befindet, mindestens ein weiteres Objekt (28) mit einem Reflektor detektiert wird und dass die Lichtabgabe mindestens eines Frontscheinwerfers (26) des Fahrzeugs (12) abhängig von der ermittelten Helligkeit der Abbildung des weiteren Objekts gesteuert wird.

18. Anordnung zum Steuern der Lichtabgabe des mindestens einen Frontscheinwerfers eines Fahrzeugs,
mit einer Bilderfassungseinheit (16), die mindestens ein Bild mit einer Abbildung eines Bereichs vor dem Fahrzeug (12) erfasst und dem Bild entsprechende Bilddaten erzeugt und bereitstellt, und
mit einer Verarbeitungseinheit (22), die die bereitgestellten Bilddaten verarbeitet,
wobei die Verarbeitungseinheit (22) im erfassten Bild eine Abbildung mindestens eines Objekts (28) detektiert,
die Verarbeitungseinheit (22) überprüft, ob das detektierte Objekt (28) ein Objekt (28) mit einem Reflektor oder ein selbstleuchtendes Objekt ist,
**dadurch gekennzeichnet, dass**
die Verarbeitungseinheit (22) die Helligkeit der Abbildung des Objekts (28) zumindest dann ermittelt, wenn das Objekt ein Objekt (28) mit einem Reflektor ist,
und wobei die Verarbeitungseinheit (22) die Lichtabgabe des mindestens einen Frontscheinwerfers (26) des Fahrzeugs (12) abhängig von der ermittelten Helligkeit der Abbildung des mindestens einen Objekts (28) mit einem Reflektor steuert,
wobei die Lichtabgabe des Frontscheinwerfers (26) durch die Deaktivierung einzelner Lichtquellen reduziert wird, um weniger Licht auf das Objekt abzustrahlen, wenn die ermittelte Helligkeit der Abbildung des Objekts mit einem Reflektor einen voreingestellten Sollwert oder einen voreingestellten Sollbereich überschreitet, und wobei die Lichtabgabe des Frontscheinwerfers (26) durch das Zuschalten mindestens einer weiteren Lichtquelle erhöht um mehr Licht auf das Objekt abzustrahlen, wenn die ermittelte Helligkeit der Abbildung des Objekts mit einem Reflektor einen voreingestellten Sollwert oder einen voreingestellten Sollbereich unterschreitet.

## Claims

1. A method of controlling light emission of at least one headlamp of a vehicle,
wherein at least one picture is captures including an image of a region in front of the vehicle (12),
in the captured picture, at least one image of at least one object is detected,
it is checked whether the object (28) is an object with a reflector or a self-luminous object,
**characterized in that**
the brightness of the image of the object (28) is determined at least if the object (28) is an object with a reflector, and
wherein light emission of the at least one headlamp (26) of the vehicle (12) is controlled depending on the determined brightness of the image of the at least one object (28) with a reflector,
wherein light emission of the headlamp (26) is reduced by disabling individual light sources so as to emit less light toward the object if the determined brightness of the image of the object with a reflector exceeds a predetermined set value or a predetermined set range, and
wherein light emission of the headlamp (26) is increased by enabling at least one further light source so as to emit more light toward the object if the determined brightness of the image of the object with a reflector falls below a predetermined set value or a predetermined set range.

2. The method according to claim 1, **characterized in that** objects (28) in the captured images are detected by means of an image processing procedure and/or a traffic sign recognition procedure executed by a processing unit (22), said image processing procedure or traffic sign recognition procedure detecting the images of objects (28) in least one image captured by an image detection unit (16).

3. The method according to any one of the preceding claims, **characterized in that** a stereo camera arranged at the front side is used as the image detection unit (16).

4. The method according to any one of the preceding claims, **characterized in that** a sequence of pictures with images of the region in front of the vehicle (12) is captured by means of the image detection unit (16), with the image detection unit (16) generating image data in an imagewise manner, said image data being further processed by means of a processing unit (22).

5. The method according to any one of the preceding claims, **characterized in that** only some of the pictures of a sequence of pictures captured by means of an image detection unit (16) are processed for controlling light emission of the at least one headlamp (26) of the vehicle (12).

6. The method according to any one of the preceding claims, **characterized in that** infrared light is generated by means of a further light source and is emitted into the detection region of an image detection unit (16), wherein the infrared light emitted by the light source and reflected by the object (28) with a reflector is detected by the image detection unit (16) and is further processed, separately or together with further image data, for detection of objects (28) with a reflector.

7. The method according to claim 6, **characterized in that** the infrared light serves for illuminating the close range in front of the vehicle (12).

8. The method according to any one of the preceding claims, **characterized in that** several pictures of a picture sequence are successively captured by means of an image detection unit (16), an image of the same object (28) being successively detected in each of them, wherein an object tracking procedure is performed for tracking an object (28) throughout several images.

9. The method according to any one of the preceding claims, **characterized in that** traffic signs, reflector posts and/or beacons are detected as objects (28) with a reflector.

10. The method according to any one of the preceding claims, **characterized in that** a set value or a set range is predetermined, and that it is checked whether the determined brightness of the image of the object (28) does not exceed the set value or set range, wherein the set range preferably is delimited by upper and lower set points.

11. The method according to claim 10, **characterized in that** the set value or set range is changed in dependence on the detected brightness of the environment.

12. The method according to any one of the preceding claims, **characterized in that**, in addition, light emission of the headlamp (26) of the vehicle (28) is reduced, or that the light emission range of the headlamp (26) of the vehicle (12) is changed if the determined brightness of the image of the object (28) with a reflector exceeds the predetermined set value or is beyond the predetermined set value.

13. The method according to any one of the preceding claims, **characterized in that** light emission of the headlamp (26) is further reduced by reducing the intensity of the light emitted by the headlamp (26) and/or by changing the light distribution of the light emitted by the headlamp (26).

14. The method according to any one of the preceding claims, **characterized in that** the light emission and/or the light emission range of the headlamp (26) of the vehicle (12) is increased, or changed, so as to increase brightness of the object (28) in subsequently captured pictures if the determined brightness of the image of the object (28) with a reflector falls below the predetermined set value or falls below a predetermined set range.

15. The method according to any one of the preceding claims, **characterized in that** the light emission of the headlamp (26) is additionally increased by increasing the intensity of the light emitted by the headlamp (26) and/or by changing the light distribution of the light emitted by the headlamp (26).

16. The method according to any one of the preceding claims, **characterized in that** after a change in the light emitted by the headlamp (26) the brightness of the same object (28) is repeatedly determined in a further image, and that it is checked whether the determined brightness value exceeds and/or falls below a predetermined set value or a predetermined set range.

17. The method according to any one of the preceding claims, **characterized in that**, when the detected object (28) no longer is within the detection range of an image detection unit (16) of the vehicle (12), at least one further object (28) with a reflector is detected, and that light emission of at least one headlamp (26) of the vehicle (12) is controlled in dependence on the determined brightness of the image of the further object.

18. An arrangement for controlling the light emission of the at least one headlamp of a vehicle,
having an image detection unit (16) which detects at least one picture with an image of a region in front of a vehicle and which generates and provides image data corresponding to the image, and
having a processing unit (22) which processes the image data provided,
wherein the processing unit (22) detects an image of at least one object (28) in the detected picture,
the processing unit (22) checks whether the detected object (28) is an object (28) with a reflector or is a self-luminous object,
**characterized in that**
the processing unit (22) determines the brightness of the image of the object (28) at least if the object is an object (28) with a reflector, and
wherein the processing unit (22) controls light emission of the at least one headlamp (26) of the vehicle (12) depending on the determined brightness of the image of the at least one object (28) with a reflector,
wherein light emission of the headlamp (26) is reduced by disabling individual light sources so as to emit less light toward the object if the determined brightness of the image of the object with a reflector exceeds a predetermined set value or a predetermined set range, and
wherein light emission of the headlamp (26) is increased by enabling at least one further light source so as to emit more light toward the object if the determined brightness of the image of the object with a reflector falls below a predetermined set value or a predetermined set range.

## Revendications

1. Procédé de commande de l'émission de lumière d'au moins un projecteur avant d'un véhicule,
selon lequel au moins une image représentant une reproduction d'une zone située devant le véhicule (12) est acquise (12),
dans l'image acquise, au moins une reproduction d'au moins un objet est détectée,
on contrôle si l'objet (28) est un objet comprenant un réflecteur ou un objet auto-luminescent,
**caractérisé en ce que**
la luminosité de la reproduction de l'objet (28) est déterminée au moins si l'objet (28) est un objet comprenant un réflecteur, et
**en ce que** l'émission de lumière d'au moins un projecteur avant (26) du véhicule (12) est commandée en fonction de la luminosité déterminée de la reproduction de l'objet ou des objets (28) comprenant un réflecteur,
l'émission de lumière du projecteur avant (26) étant réduite par la désactivation de différentes sources de lumière, afin qu'une quantité moindre de lumière soit émise sur l'objet, lorsque la luminosité déterminée de la reproduction de l'objet comprenant un réflecteur dépasse une valeur théorique préréglée ou une plage théorique préréglée, et l'émission de lumière du projecteur avant (26) étant augmentée par l'activation d'au moins une autre source de lumière, afin qu'une quantité accrue de lumière soit émise sur l'objet, lorsque la luminosité déterminée de la reproduction de l'objet comprenant un réflecteur est inférieure à une valeur théorique préréglée ou une plage théorique préréglée.

2. Procédé selon la revendication 1, **caractérisé en ce que** des objets (28) sont détectés dans les images acquises à l'aide d'un procédé de traitement d'image exécuté par une unité de traitement (22) et/ou d'un procédé de reconnaissance de caractères, qui détectent les reproductions d'objets (28) dans au moins une image enregistrée par une unité d'acquisition d'image (16).

3. Procédé selon l'une quelconque des revendications précédentes, **caractérisé en ce qu'**une caméra stéréo agencée frontalement est utilisée comme unité d'acquisition d'image (16).

4. Procédé selon l'une quelconque des revendications précédentes, **caractérisé en ce qu'**une succession d'images présentant les reproductions de la zone située devant le véhicule (12) est enregistrée à l'aide d'une unité d'acquisition d'image (16), l'unité d'acquisition d'image (16) générant des données d'image image par image, qui sont retraitées à l'aide d'une unité de traitement d'image (22).

5. Procédé selon l'une quelconque des revendications précédentes, **caractérisé en ce que** seules quelques-unes des images d'une succession d'images acquises à l'aide d'une unité d'acquisition d'image (16) sont traitées pour commander l'émission de lumière du ou des projecteurs avant (26) du véhicule (12).

6. Procédé selon l'une quelconque des revendications précédentes, **caractérisé en ce qu'**une lumière infrarouge est générée à l'aide d'une autre source de lumière et est émise dans la zone d'acquisition d'une unité d'acquisition d'image (16), la lumière infrarouge émise par la source de lumière et réfléchie par l'objet (28) comprenant un réflecteur étant acquise par l'unité d'acquisition d'image (16) et retraitée séparément des autres données d'images ou conjointement avec celles-ci pour détecter des objets (28) comprenant un réflecteur.

7. Procédé selon la revendication 6, **caractérisé en ce que** la lumière infrarouge sert à éclairer la zone proche de l'avant du véhicule (12).

8. Procédé selon l'une quelconque des revendications précédentes, **caractérisé en ce que** plusieurs images d'une succession d'images, dans lesquelles dans chaque cas une reproduction du même objet (28) est détectée, sont acquises successivement à l'aide d'une unité d'acquisition d'image (16), un procédé de suivi d'objets étant mis en oeuvre pour suivre un objet (28) sur plusieurs images.

9. Procédé selon l'une quelconque des revendications précédentes, **caractérisé en ce que** des panneaux de signalisation, des poteaux indicateurs et/ou des balises de signalisation sont détectés en tant qu'objets (28) comprenant un réflecteur.

10. Procédé selon l'une quelconque des revendications précédentes, **caractérisé en ce qu'**une valeur théorique ou une plage théorique est préréglée, et **en ce qu'**on contrôle si la luminosité déterminée de la reproduction de l'objet (28) ne dépasse pas la valeur théorique ou la plage théorique, la plage théorique étant limitée de préférence par une valeur théorique supérieure et une valeur théorique inférieure.

11. Procédé selon la revendication 10, **caractérisé en ce que** la valeur théorique ou la plage théorique est modifiée en fonction de la luminosité déterminée de l'environnement.

12. Procédé selon l'une quelconque des revendications précédentes, **caractérisé en ce que**, en outre, l'émission de lumière du projecteur avant (26) du véhicule (12) est réduite ou la zone d'émission de lumière du projecteur avant (26) du véhicule (12) est modifiée si la luminosité déterminée de la reproduction de l'objet (28) comprenant un réflecteur dépasse la valeur théorique préréglée ou se situe à l'extérieur de la plage théorique préréglée.

13. Procédé selon l'une quelconque des revendications précédentes, **caractérisé en ce que** l'émission de lumière du projecteur avant (26) est réduite en outre par une réduction de l'intensité de la lumière émise par le projecteur avant (26) et/ou par une modification de la répartition de lumière de la lumière émise par le projecteur avant (26).

14. Procédé selon l'une quelconque des revendications précédentes, **caractérisé en ce que** l'émission de lumière et/ou la plage d'émission de lumière du projecteur avant (26) du véhicule (12) est augmentée ou modifiée, afin d'augmenter la luminosité de la reproduction de l'objet (28) dans les images acquises par la suite, si la luminosité déterminée de la reproduction de l'objet (28) comprenant un réflecteur est inférieure à la valeur théorique préréglée ou est inférieure à une plage théorique préréglée.

15. Procédé selon l'une quelconque des revendications précédentes, **caractérisé en ce que** l'émission de lumière du projecteur avant (26) est augmentée en outre par une augmentation de l'intensité de la lumière émise par le projecteur avant (26) et/ou par une modification de la répartition de lumière de la lumière émise par le projecteur avant (26).

16. Procédé selon l'une quelconque des revendications précédentes, **caractérisé en ce que**, après la modification de la lumière émise par le projecteur avant (26), la luminosité de la reproduction du même objet (28) dans une autre image est déterminée à plusieurs reprises, et on contrôle si la valeur de luminosité déterminée est inférieure à une valeur théorique préréglée ou à une plage théorique préréglée et/ou la dépasse.

17. Procédé selon l'une quelconque des revendications précédentes, **caractérisé en ce qu'**après que l'objet (28) détecté ne se situe plus dans la zone d'acquisition d'une unité d'acquisition d'image (16) du véhicule (12), au moins un autre objet (28) comprenant un réflecteur est détecté et **en ce que** l'émission de lumière d'au moins un projecteur avant (26) du véhicule (12) est commandée en fonction de la luminosité déterminée de la reproduction de l'autre objet.

18. Ensemble de commande de l'émission de lumière du ou des projecteurs avant d'un véhicule,
comprenant une unité d'acquisition d'image (16) qui acquiert au moins une image comprenant une reproduction d'une zone située devant le véhicule (12) et génère et fournit des données d'image correspondant à l'image, et
comprenant une unité de traitement (22) qui traite les données d'image fournies,
l'unité de traitement (22) détectant dans l'image acquise une reproduction d'au moins un objet (28),
l'unité de traitement (22) contrôlant si l'objet (28) détecté est un objet (28) comprenant un réflecteur ou un objet auto-luminescent,
**caractérisé en ce que**
l'unité de traitement (22) détermine la luminosité de la reproduction de l'objet (28) au moins si l'objet est un objet (28) comprenant un réflecteur,
**en ce que** l'unité de traitement (22) commande l'émission de lumière du ou des projecteurs avant (26) du véhicule (12) en fonction de la luminosité déterminée de la reproduction de l'objet ou des objets (28) comprenant un réflecteur,
l'émission de lumière du projecteur avant (26) étant réduite par la désactivation de différentes sources de lumière, afin qu'une quantité moindre de lumière soit émise sur l'objet, si la luminosité déterminée de la reproduction de l'objet comprenant un réflecteur dépasse une valeur théorique préréglée ou une plage théorique préréglée, et l'émission de lumière du projecteur avant (26) augmentant à la suite de l'activation d'au moins une autre source de lumière afin qu'une quantité accrue de lumière soit émise sur l'objet,
si la luminosité déterminée de la reproduction de l'objet comprenant un réflecteur est inférieure à une valeur théorique préréglée ou à une plage théorique préréglée.
